Europäisches Patentamt

(19) European Patent Office

Office européen des brevets

(11) Numéro de publication : **0 310 520 B1**

(12) # FASCICULE DE BREVET EUROPEEN

(45) Date de publication du fascicule du brevet :
18.09.91 Bulletin 91/38

(51) Int. Cl.⁵ : **G01B 5/255**

(21) Numéro de dépôt : 88402478.7

(22) Date de dépôt : 30.09.88

(54) **Banc de mesure et réglage du parallélisme d'un train de roues de véhicule automobile.**

(30) Priorité : 02.10.87 FR 8713612

(43) Date de publication de la demande :
05.04.89 Bulletin 89/14

(45) Mention de la délivrance du brevet :
18.09.91 Bulletin 91/38

(84) Etats contractants désignés :
DE ES FR IT

(56) Documents cités :
EP-A- 0 158 773
FR-A- 985 714
FR-A- 2 238 915
FR-A- 2 487 065
US-A- 3 643 337

(73) Titulaire : RENAULT AUTOMATION
8/10 avenue Emile Zola
F-92109 Boulogne-Billancourt (FR)

(72) Inventeur : Barraud, Claude
2, Rue de l'Orée du Bois
F-78340 Les Clayes sous Bois (FR)
Inventeur : Fontaine, Patrick
17, Rue Mozart
F-91620 Nozay (FR)
Inventeur : Fanjat, Serge
13, Rue Estienne d'Orves
F-78220 Viroflay (FR)

(74) Mandataire : Saint Martin, René et al
Régie Nationale des Usines Renault Direction
des Recherches et Développements Service
0804 8-10, Avenue Emile-Zola
F-92109 Boulogne Billancourt Cedex (FR)

## Description

La présente invention se rapporte à un banc de mesure et réglage du parallélisme d'un train de roues de vehicule automobile, comprenant un ensemble de roulage à rouleaux recevant les roues du vehicule et, de chaque côté du vehicule, deux ensembles de mesure comportant chacun une tête de palpage pourvue de galets prenant appui sur un pneumatique et un mécanisme de deplacement en translation transversale de ladite tête.

On connaît un dispositif du type précédent par le document FR-A-2238915.

Il propose un dispositif avec deux têtes symétriques et mobiles qui viennent mettre en appui sur chacune des roues un jeu de rouleaux pour lire les angles caractéristiques d'un train avant de véhicule automobile.

Le document FR-A-2487065 décrit un système semblable avec un procédé de détermination de la position de l'axe du véhicule en utilisant la lecture de la position des têtes latérales d'appui sur les roues.

La présente invention se rapporte à un banc de mesure du parallélisme tenant compte du désalignement axial et angulaire du véhicule sur le banc de mesure. Elle permet une mise à niveau des têtes de palpage de manière à permettre le réglage dans l'axe des roues. Elle permet d'appliquer un effort constant et réglable des têtes de mesure sur les roues. L'effort est identique sur les deux roues.

Le banc de mesure est caractérisé par le fait qu'il comporte deux dispositifs de centrage mobiles dans le plan horizontal et verticalement, munis chacun d'une pièce de centrage coopérant avec un centrage du berceau du véhicule et un dispositif de mesure de la position de ladite tête de centrage.

Selon une caractéristique, il comporte entre le bras horizontal de support de la tête de palpage et un organe moteur de déplacement horizontal de ce bras, un système d'appui de la tête comportant des moyens pour autoriser les mouvements relatifs horizontaux du bras et de l'entraînement de l'organe moteur et des moyens pour appliquer la tête de palpage avec un effort sur la roue.

L'invention va maintenant être décrite avec plus de détails en se référant à un mode de réalisation donné à titre d'exemple et représenté par les dessins annexés sur lesquels :

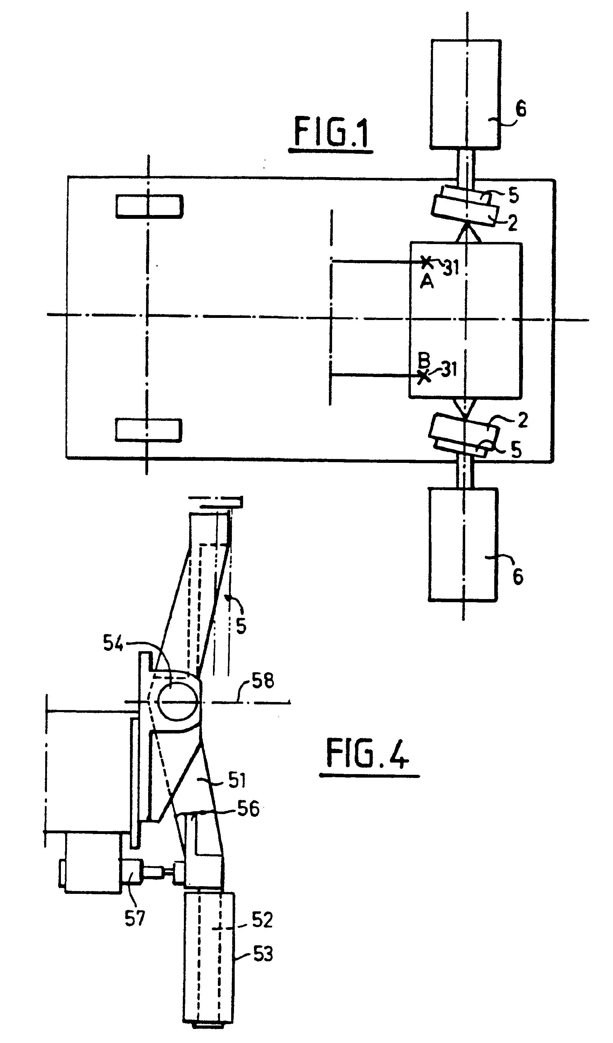

— la figure 1 est un schéma de principe du banc,

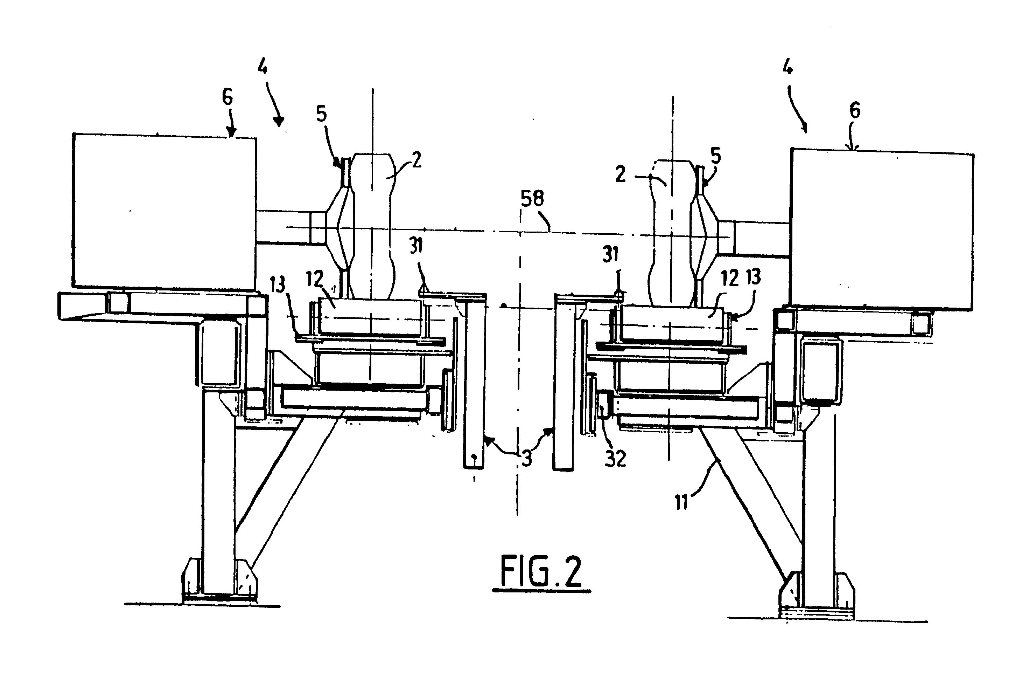

— la figure 2 est une vue en élévation du banc selon l'invention.

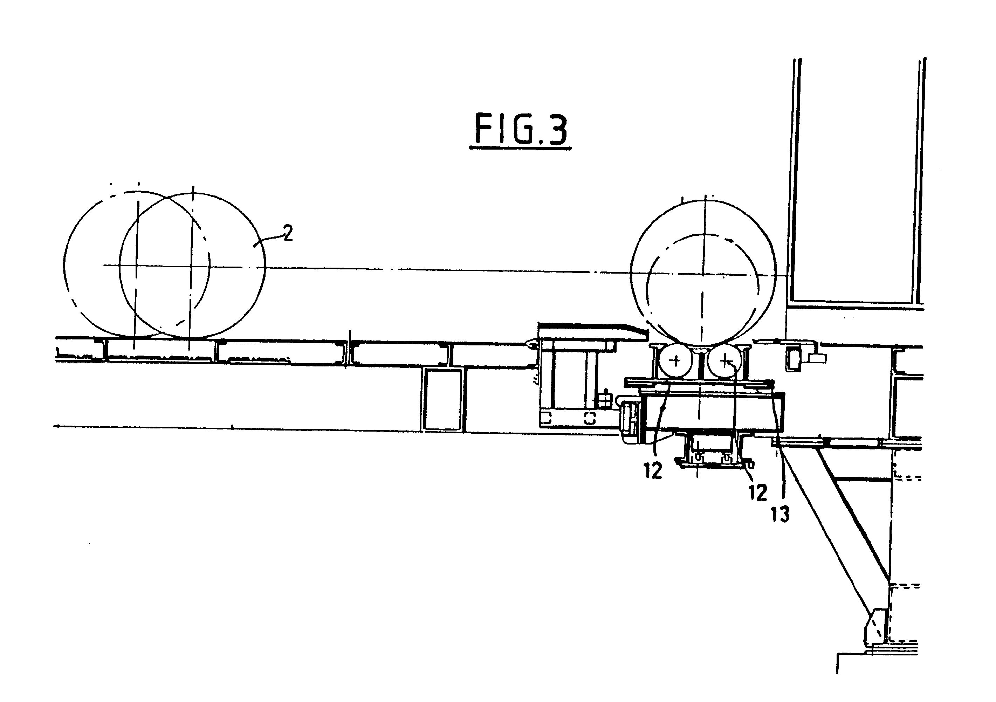

— la figure 3 est une vue de côté de la figure 1,

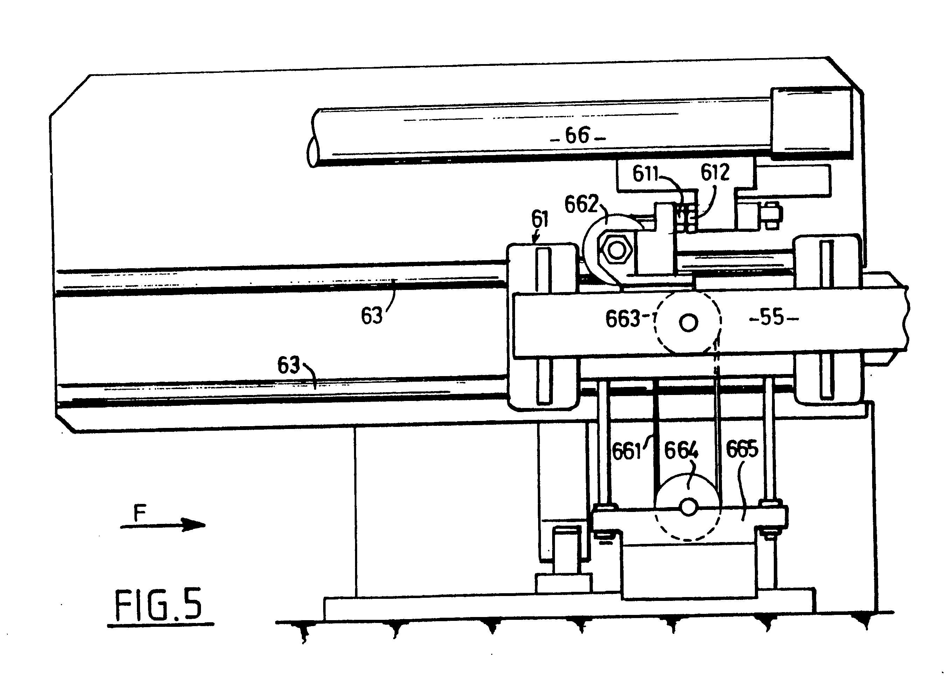

— la figure 4 est une vue de dessus de la tête de palpage,
— la figure 5 est une vue en élévation de l'unité de translation associée à la tête de palpage,

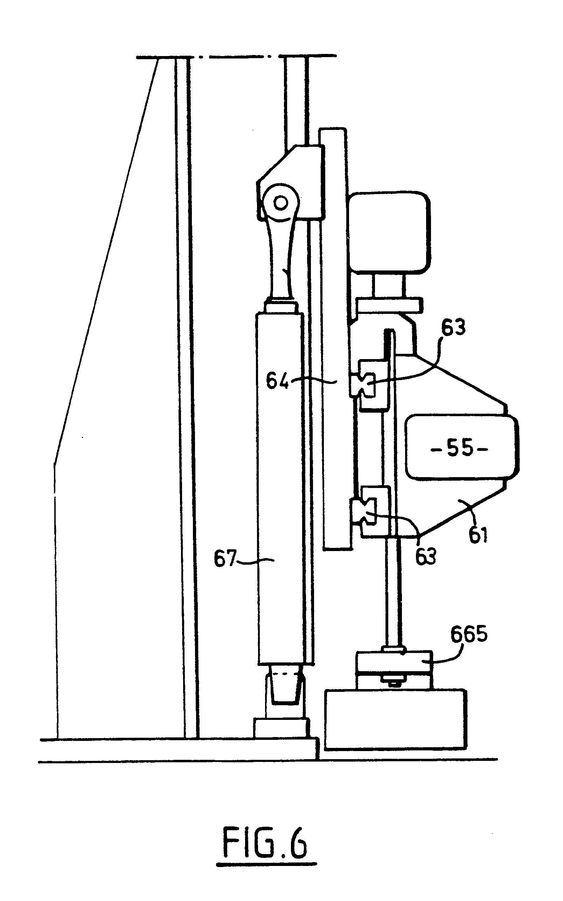

— la figure 6 est une vue suivant F de la figure 5.

En se référant aux dessins, le banc se compose d'une charpente mécano-soudée 11 pourvue d'un plancher de roulement sur lequel roulent les roues 2 du véhicule. Cette charpente porte, de chaque côté du plan longitidinal théorique des véhicules, deux ensembles de roulage comportant chacun deux tambours motorisés 12 entraînés autour d'axes transversaux. Les tambours sont montés sur des châssis flottants 13 qui évitent toute contrainte sur le pneumatique.

Le banc comprend deux dispositifs de centrage 3 mobiles dans le plan horizontal et verticalement. Chaque dispositif présente à la partie supérieure une pièce de centrage 31 qui s'engage dans un centrage du berceau du groupe motopropulseur du véhicule. Le déplacement de chaque dispositif est réalisé par un opérateur qui positionne la pièce de centrage 31 en face du centrage du berceau. Le déplacement du dispositif selon l'axe longitudinal est mesuré par un capteur 32.

De chaque côté du véhicule, le banc comporte un ensemble de mesure 4 constitué d'une tête de palpage 5 et d'une unité de translation 6.

La tête de palpage 5 est constituée par un palonnier de palpage 51 portant des arbres radiaux 52 sur lesquels tourbillonnent, par des paliers, des galets d'appui 53.

Ce palonnier de palpage à galets est porté à l'extrémité d'un bras horizontal 55 auquel il est articulé autour d'un axe vertical 54 se centrant sur l'axe de la roue 58.

Un capteur de mesure 57 est monté sur le bras 55 de manière à mesurer l'orientation du palonnier 51. Un ressort de traction 56 tend à appliquer le palonnier sur le capteur de mesure 57.

Le bras horizontal mobile 55 portant le palonnier de palpage est déplacé en translation parallèlement à 58 par l'unité de translation 6.

Ce bras 55 est monté sur un chariot 61 guidé par des patins sur des rails de guidage 63 fixés à un support 64 mobile verticalement.

Le chariot 61 est commandé par un vérin horizontal sans tige 66. La liaison entre le chariot 61 et le vérin est assurée par un système à câble, poulies et contrepoids assurant un effort constant et faible de la tête de palpage 5 sur le pneumatique.

La liaison à câble comprend un câble 661 attaché à une extrémité au vérin 66 et à son autre extrémité sur le chariot 61. Ce câble s'enroule sur une poulie supérieure folle 662 et sur une poulie intermédiaire folle 663, ces deux poulies tournant autour d'axes horizontaux sur le chariot 61. Une poulie inférieure mobile 664 à laquelle est suspendue un contrepoids 665 assure la tension du câble 661 et tend à déplacer la poutre 55 vers le véhicule par rapport au vérin en assurant le contact. Le chariot présente une butée 611 coopérant avec une butée 612 du vérin 6, ces deux butées limitant l'avance de la poutre 55 vers la roue relativement au vérin 6.

Le support 64 peut être déplacé verticalement grâce à un vérin 67 de manière à assurer la mise à niveau de la tête de palpage par rapport à la roue.

Le fonctionnement du banc va maintenant être décrit.

Après mise en place d'une automobile sur le banc, l'opérateur positionne les dispositifs de centrage 3.

Les têtes de palpage 5 sont avancées vers les roues par les unités de translation 6. Le mouvement d'avance est procuré par le vérin 66 qui fonctionne entre deux positions de fin de course.

Pendant le début du mouvement d'avance, le chariot 61 reste en butée sur le vérin et suit son mouvement. Dès que la tête de palpage entre en contact avec la roue, la butée 611 se décolle de la butée 612. Grâce au contrepoids 665, l'effort exercé sur la roue est constant.

Les calculs tiennent compte des mesures données par les capteurs 57 ainsi que des mesures données par les capteurs 32 (cotes A et B) par rapport à une direction transversale de référence.

## Revendications

1. Banc de mesure du parallélisme d'un train de roues d'un véhicule automobile comprenant un ensemble de roulage à tambours motorisés (12) recevant les roues du véhicule et, de chaque côté du véhicule, un ensemble de mesure comportant chacun une unité de translation transversale (6) avec une tête de palpage (5) portant un palonnier (51) pourvu de galets d'appui (53) et d'un capteur (57) de mesure angulaire dudit palonnier caractérisé par le fait qu'il comporte entre les tambours motorisés (12) deux dispositifs de centrage (3) muni chacun d'une pièce de centrage (31) réglables dans le plan horizontal et dans le plan vertical avec un capteur de mesure (32) de la position d'une pièce de centrage (31) par rapport au bâti (11) du banc de mesure.

2. Banc de mesure selon la revendication 1 caractérisé par le fait qu'il comporte entre le bras horizontal (55) de support de la tête de palpage (5) et un organe moteur (66) de déplacement horizontal de ce bras, un système d'appui (661, 662, 663, 664) de la tête (5) sur la roue (2) du véhicule, qui autorise les mouvements horizontaux relatifs du bras (55) avec l'organe moteur (66), et des moyens (665) pour appliquer la tête de palpage (5) avec un effort constant sur la roue (2).

3. Banc selon l'une quelconque des revendications précédentes caractérisé par le fait que le système d'appui est constitué par un système à câble (661) s'enroulant sur des poulies (662, 663) portées par le chariot, et tendu par un contrepoids suspendu (665) à une poulie mobile (664) s'enroulant sur le câble.

## Patentansprüche

1. Meßbank für die Spur von Kraftfahrzeug-Radpaaren, mit einer Drehanordnung, welche antreibbare Drehtrommeln (12) zur Aufnahme der Fahrzeugräder aufweist und, auf jeder Fahrzeugseite, eine Meßanordnung aufweist, die jeweils eine Querverschiebeeinheit (6) enthält, mit einem Fühlerkopf (5), der einen Balken (51) trägt, welcher mit Stützrollen (53) und einem Fühler (57) zur Messung der Winkelstellung des Balkens versehen ist, dadurch gekennzeichnet, daß zwischen den antreibbaren Drehtrommeln (12) zwei Zentriervorrichtungen (3) vorgesehen sind, deren jede mit einem Zentrierstück (31) versehen ist, das in einer waagrechten und in einer senkrechten Ebene einstellbar ist mittels eines Fühlers (32) für die Steuerung der Stellung des Zwischenstücks (31) bezüglich des Gehäuses (11) der Meßbank.

2. Meßbank nach Anspruch 1, dadurch gekennzeichnet, daß sie zwischen einem waagrechten Arm (55) der Halterung des Fühlerkopfes (5) und einem Antriebsteil (66) für die Waagrechtverschiebung dieses Arms ein Stützsystem (661, 662, 663, 664) für den Kopf (5) auf dem Rad (2) des Fahrzeugs aufweist, welches die waagrechten Relativverschiebungen des Arms (55) mit dem Antriebsteil (66) ermöglicht sowie eine Anordnung (665), um den Fühlerkopf (5) mit konstanter Kraft auf das Rad (2) zu drücken.

3. Meßbank nach einem der vorhergehenden Ansprüche, dadurch gekennzeichnet, daß das Stützsystem aus einem Kabelsystem (661) besteht, welches über Riemenräder (662, 663) läuft, die von einem Gestell getragen werden und das von einem Gegengewicht (665) gestrafft wird, das von einem beweglichen vom Kabel umschlungenen Riemenrad (664) getragen ist.

## Claims

1. A stand for measuring the alignment of a set of wheels of a motor vehicle comprising a rolling assembly having motor-driven drums (12) for receiving the wheels of the vehicle and on each side of the vehicle a measuring assembly each comprising a unit (6) for transverse translatory movement with a feeler head (5) carrying a swing bar (51) provided with support roller members (53) and a sensor (57) for angular measurement of said swing bar characterised in that it comprises between the motor-driven drums (12) two centering devices (3) each provided with a centering portion (31) which are adjustable in the horizontal plane and in the vertical plane with a sensor (32) for measuring the position of a centering portion (31) with respect to the frame structure (11) of the measuring stand.

2. A measuring stand according to claim 1 characterised in that it comprises between the horizontal arm (55) for supporting the feeler head (5) and a drive member (66) for horizontal displacement of said arm, a system (661, 662, 663, 664) for causing the head (5) to bear against the wheel (2) of the vehicle, which permits relative horizontal movements of the arm (55) with the drive member (66) and means (665) for applying the feeler head (5) against the wheel (2) with a constant force.

3. A stand according to either one of the preceding claims characterised in that the system for causing the head (5) to bear against the vehicle wheel is formed by a system having a cable (661) which passes around pulleys (662, 663) carried by the carriage, and tensioned by a counterweight (665) suspended from a movable pulley (664) which rolls on the cable.

## FIG.1

31
A

B 31

5

2

6

5

2

6

## FIG.4

5

54

58

51

56

57

52

53

FIG.2

EP 0 310 520 B1

# FIG.3

EP 0 310 520 B1

FIG.5

EP 0 310 520 B1

FIG.6